# EUROPÄISCHE PATENTSCHRIFT

(11) **EP 1 702 993 B1**
(45) Veröffentlichungstag und Bekanntmachung des Hinweises auf die Patenterteilung: **24.08.2011**
(21) Anmeldenummer: 06110669.6
(22) Anmeldetag: 03.03.2006
(51) Int. Cl.: C21D 1/10, C21D 9/00

(54) **Verfahren und Vorrichtung zum abschnittsweisen Durchhärten von aus Stahlblech fertig geformten Bauteilen**
Method and apparatus for through-hardening sections of steel plate finished formed components
Procédé et installation de durcissement à coeur par section de pièces en acier finies obtenues par formage

(30) Priorität: 16.03.2005 DE 102005012522
(43) Veröffentlichungstag der Anmeldung: 20.09.2006
(73) Patentinhaber: ThyssenKrupp Umformtechnik GmbH, 33647 Bielefeld (DE)
(72) Erfinder: Horstkott, Dirk, Dipl.-Ing., 49205 Hasbergen (DE)
(74) Vertreter: Cohausz & Florack

(56) Entgegenhaltungen:
- DD-A1- 277 281
- DE-A1- 19 640 568
- US-A1- 2005 006 828
- ALTENA H ET AL: "ZUNDERFREIES, INDUKTIVES HAERTEN UND DESSEN EINSATZ IN DER KFZ-INDUSTRIE" HTM HAERTEREI TECHNISCHE MITTEILUNGEN, CARL HANSER VERLAG, MUNCHEN, DE, Bd. 54, Nr. 4, Juli 1999 (1999-07), Seiten 216-221, XP000846463 ISSN: 0341-101X
- PATENT ABSTRACTS OF JAPAN Bd. 1999, Nr. 04, 30. April 1999 (1999-04-30) -& JP 11 021619 A (DENKI KOGYO CO LTD), 26. Januar 1999 (1999-01-26)
- PATENT ABSTRACTS OF JAPAN Bd. 1999, Nr. 04, 30. April 1999 (1999-04-30) -& JP 11 021630 A (DENKI KOGYO CO LTD), 26. Januar 1999 (1999-01-26)
- PATENT ABSTRACTS OF JAPAN Bd. 1995, Nr. 05, 30. Juni 1995 (1995-06-30) -& JP 07 054048 A (NISSHIN STEEL CO LTD), 28. Februar 1995 (1995-02-28)

## Beschreibung

Die Erfindung betrifft ein Verfahren und eine Vorrichtung zum abschnittsweisen Durchhärten von aus Stahlblech fertig geformten Bauteilen

Karosserien für Fahrzeuge werden üblicherweise aus vorgeformten Blechbauteilen zusammengesetzt. Aufgrund der vielfältigen Belastungen, denen diese Bauteile im praktischen Einsatz unterworfen sein können, bestehen dabei unterschiedlichste Anforderungen an ihre Festigkeit, ihr Verformungsverhalten und ihre Fähigkeit, wechselnde Belastungen aufzunehmen.

Besonders kritisch erweisen sich in diesem Zusammenhang Struktur- oder Sicherheitselemente, die bei einem Unfall einerseits die kinetische Energie des Aufpralls aufnehmen müssen, andererseits jedoch eine so hohe Festigkeit besitzen sollen, dass bei einem Crash eine optimale Formstabilität und damit einhergehend einen weitestmöglichen Schutz der Insassen des Fahrzeugs gewährleisten. Als Beispiele für solche Bauteile zu nennen sind Seitenaufprallträger, Dachspiegel, Verstärkungsteile etc. Gerade an Bauteilen dieser Art besteht die zusätzliche Anforderung, dass auch sie ein möglichst geringes Gewicht besitzen sollen. Ebenso soll die Form der Bauteile möglichst frei an die jeweilige Formgebung der Karosserie und ihren Einsatzzweck angepasst werden können.

Es ist versucht worden, die an Karosseriebauteile der voranstehend erläuterten Art gestellten Anforderungen dadurch zu erfüllen, dass Profile zur Verfügung gestellt werden, die nach ihrer Formgebung mindestens partiell einer Härtung unterzogen werden. So ist beispielsweise aus der DE 101 20 063 C2 ein Verfahren zur Herstellung von metallischen Profilbauteilen für Kraftfahrzeuge bekannt, bei dem in Bandform bereitgestelltes Ausgangsmaterial einer Walzprofiliereinheit zugeführt und zu einem Walzprofil umgeformt wird. Nach Verlassen der Walzprofiliereinheit wird das Walzprofil mindestens partiell auf Härtetemperatur induktiv erwärmt und unmittelbar anschließend abgeschreckt, so dass über den betreffenden Profilabschnitt ein Härtegefüge entsteht. Von dem derart behandelten Walzprofil werden dann Teilstücke abgelängt, die der weiteren Verarbeitung zugeführt werden.

Nachteilig an dem voranstehend beschriebenen bekannten Verfahren ist, dass mit ihm zwar Profile hergestellt werden können, die Abschnitte von hoher Festigkeit und daran unmittelbar anschließende Abschnitte guter Verformbarkeit aufweisen, dass die Weiterverarbeitung dieser Profile jedoch schwierig ist. So erweist es sich aufgrund der gehärteten Zonen beispielsweise als schwierig, die in der bekannten Weise hergestellten Profile so umzuformen, dass sie an die sich in der Karosserie jeweils stellende Einbausituation angepasst sind. Hinzukommt, dass die Oberflächenbeschaffenheit der Profile in Folge des Härtungsvorgangs durch Verzunderung so verschlechtert ist, dass eine aufwändige Nachbehandlung erforderlich ist, um sie mit einer Lackbeschichtung versehen zu können.

Dieses Problem besteht auch bei der aus der US-A-2005 006 828 bekannten Vorrichtung, die wie die vorliegende Erfindung dazu bestimmt ist, aus 0,5 - 3,0 mm dickem Stahlblech fertig geformte Bauteile abschnittsweise durchzuhärten, wobei dazu der jeweils durchzuhärtende Abschnitt und ein ein elektromagnetisches Feld induzierender Induktor relativ zueinander bewegt werden, der durchzuhärtende Abschnitt in dem vom Induktor jeweils erfassten Teilbereich induktiv auf Härtetemperatur erwärmt wird und bei dem der auf Härtetemperatur erwärmte Teilbereich unmittelbar nach dieser Erwärmung so abgeschreckt wird, dass in dem jeweils fertig gehärteten Teilbereich über die Dicke des Bauteils Härtegefüge erhalten wird. Allerdings zeigt sich, dass bei den auf diese bekannte Weise erhaltenen, über einen Teilabschnitt gehärteten Bauteile der Übergangsbereich zwischen dem gehärteten Teilabschnitt und den angrenzenden nicht gehärteten Abschnitten nicht eindeutig definiert ist.

Neben dem voranstehend erläuterten bekannten Verfahren, mit dem Profile mit durchgehärteten Abschnitten erzeugt werden können, sind aus dem Stand der Technik eine Vielzahl von Anwendungen bekannt, mit denen eine partielle Randschichthärtung durchgeführt wird. Diese Verfahren haben jedoch jeweils ein grundsätzlich anderes Ziel als Verfahren der hier in Rede stehenden Art. So besteht das Ziel der Randschichthärtung von Bauteilen darin, in einer oberflächennahen Randzone eine hohe Härte zu erzeugen, während der darunter liegende Werkstoff seine ursprüngliche Zähigkeit behalten soll. Auf diese Weise werden im oberflächengehärteten Bereich des Bauteils für den jeweiligen Anwendungszweck optimierte Eigenschaftskombinationen, wie gute Verformbarkeit oder dynamische Belastbarkeit bei gleichzeitig hoher Verschleißbeständigkeit, erzielt.

Ausgehend von dem eingangs erläuterten Stand der Technik bestand die Aufgabe der Erfindung darin, ein Verfahren und eine Vorrichtung zu schaffen, die die Herstellung von hinsichtlich ihrer Formgebung, ihrer Oberflächenbeschaffenheit und ihrer Festigkeitsverteilung optimal an den jeweiligen Einsatzzweck angepassten Bauteilen ermöglichen.

In Bezug auf das Verfahren ist diese Aufgabe erfindungsgemäß dadurch gelöst worden, dass ein solches Verfahren die in Anspruch 1 angegebenen Arbeitsschritte umfasst. Vorteilhafte Ausgestaltungen dieses Verfahrens sind in den auf Anspruch 1 rückbezogenen Ansprüchen angegeben.

Dementsprechend besteht die Lösung der oben genannten Aufgabe in Bezug auf die Vorrichtung erfindungsgemäß darin, dass eine solche Vorrichtung die in Anspruch 11 angegebenen Merkmale aufweist.

Wie beim Stand der Technik werden auch gemäß der Erfindung werden die zuvor beispielsweise in einem Presswerk fertig geformten Blechbauteile mit Hilfe eines Induktors jeweils in dem Abschnitt, in dem die Durchhärtung erzeugt werden soll, auf Härtetemperatur gebracht. Das Bauteil und der Induktor werden für die Erwärmung ausgehend von einer Anfangsposition relativ zueinander bewegt, so dass bis zum Ende des Härtevorgangs die gesamte Länge des zu härtenden Abschnitts durch das vom Induktor induzierte elektromagnetische Feld auf die Härtetemperatur erwärmt worden ist. Um eine vollständige Austenitbildung im jeweils erwärmten Teilbereich des durchzuhärtenden Abschnitts zu erreichen, wird diese Härtetemperatur in der Regel über der A_{C3}-Temperatur des Stahls liegen, aus dem die Blechbauteile gefertigt sind.

Die induktive, auf jeweils einen Teilbereich des durchzuhärtenden Abschnitts beschränkte Erwärmung erfolgt erfindungsgemäß lokal unter einem Schutzgasmantel, um den Kontakt der erwärmten Oberfläche mit dem Umgebungssauerstoff und damit die Gefahr einer Verzunderung weitestgehend zu verhindern. Hierzu wird das Bauteil von einem Schutzgasstrom derart umströmt, dass sich unter Berücksichtigung der sich im jeweils erwärmten Teilbereich ausbildenden Strömungsschichtung des Gases eine optimale Abschottung gegenüber der Umgebungsluft ergibt.

Mit der erfindungsgemäßen Beaufschlagung der Oberfläche des erwärmten Teilbereichs des durchzuhärtenden Bauteils mit Schutzgas wird erreicht, dass die Bauteiloberfläche im durchgehärteten Abschnitt nach dem Vergüten ein derartiges Maß an Zunderfreiheit aufweist, dass ohne einen weiteren zwischengeschalteten Behandlungsschritt eine unmittelbar anschließende Phosphatierung und kathodische Tauchlackierung möglich ist. Das Merkmal "zunderfreie Oberfläche" ist in diesem Zusammenhang so zu verstehen, dass die Dicke der sich auf der erwärmten Oberfläche unvermeidbar bildenden Oxidschichtdicke einen bestimmten kritischen Wert nicht überschreitet, ab dem eine unmittelbar anschließende Phosphatierung und Tauchlackierung nicht mehr problemlos möglich ist. Deshalb erfolgt die Beaufschlagung des induktiv erwärmten Bauteilbereiches mit Schutzgas erfindungsgemäß derart, dass die Oxidschichtdicke am fertig durchgehärteten Bauteil stets unter einem hinsichtlich der Eignung für das Phosphatieren oder Tauchlackieren kritischen Grenzwert liegt.

Indem das Bauteil während des Härtungsprozesses an der Grenze des durchzuhärtenden Abschnitts jeweils mit einer Wärmesenke verkoppelt wird, wird die von dem durchzuhärtenden Abschnitt zu dem nicht zu härtenden Abschnitt des Bauteils vordringende Wärme abgeleitet, so dass ein exakt definierter Übergangsbereich zwischen dem gehärteten und dem jeweils ungehärteten Abschnitt des Bauteils hergestellt wird. Eine solche Wärmesenke wird erfindungsgemäß dadurch hergestellt, dass mindestens eine an der Grenze zwischen dem durchzuhärtenden Abschnitt und dem nicht gehärteten Abschnitt des Bauteils positionierbare Spanneinrichtung vorgesehen ist, die in wärmeleitendem Kontakt mit dem Bauteil steht und in den Grenzbereich gelangende Wärme abführt. Eine verbesserte Wirksamkeit, mit der der ungewollte Wärmefluss zwischen dem durchzuhärtenden und dem im ursprünglichen Zustand zu erhaltenden Abschnitt des Bauteils unterdrückt wird, wird dabei erfindungsgemäß dadurch erreicht, dass die Spanneinrichtung aktiv gekühlt ist.

Unmittelbar nach der Erwärmung erfolgt dann die Abschreckung des induktiv erwärmten Teilbereichs mit einer Abschreckflüssigkeit. Die Abkühlung des erwärmten Querschnitts findet dabei bevorzugt so schnell statt, dass eine weitestgehend vollständige, komplette Phasenumwandlung des Werkstoffs des erwärmten Profilquerschnitts in die Martensitphase erfolgt. Auf diese Weise kann in dem durchgehärteten Abschnitt eine 400 - 550 HV1 betragende Härte über den gesamten Querschnitt erreicht werden. Zur Herstellung erfindungsgemäß behandelter Bauteile eignen sich vergütbare Stähle, die ein ausreichendes Härtungspotenzial besitzen. Besonders sicher erreichen lassen sich die voranstehend genannten Härtewerte, wenn das Bauteil aus einem borlegierten Stahl hergestellt ist. Ein solcher Stahl kann aus (in Gew.-%) 0,15 % < C < 0, 5 %, 0,5 % < Mn < 3 %, 0,1 % < Si < 0,5 %, 0,01 % < Cr < 1 %, Ti < 0,2 %, Al < 0,1 %, P < 0,1 %, S < 0,05 %, 0,0005 % < B < 0,08 %, Rest Eisen und unvermeidbaren Verunreinigungen bestehen. Ein Stahl dieser Art ist beispielsweise unter dem Kurznamen 22MnB5 bekannt und wird in der StahlEisenListe unter der Werkstoffnummer 1.5528 geführt.

In Bezug auf das Produkt ist die oben angegebene Aufgabe daher durch ein aus einem 0,5 - 3 mm dicken Stahlblech fertig geformtes Bauteil gelöst worden, das aus einem borlegierten Stahl erzeugt ist, und einen vollständig durchgehärteten Abschnitt, dessen Härte 400 - 550 HV1 beträgt, sowie mindestens einen daran kontinuierlich anschließenden nicht gehärteten Abschnitt besitzt. Aufgrund seiner chemischen Zusammensetzung weist ein erfindungsgemäßes Bauteil auch in seinem durchgehärteten Abschnitt noch eine gute Restbruchdehnung bei vollständiger Härtegefügebildung auf. Ebenso ist es dort bei Einsatz geeigneter Schweißverfahren noch gut schweißbar.

Mit der Erfindung ist es somit auf einfache und produktive Weise möglich, einbaufertig geformte Bauteile partiell induktiv so durchzuhärten, dass an den durchgehärteten Bereichen die Verzunderung so stark minimiert ist, dass eine nachfolgende Beschichtung des Bauteils insbesondere in Form einer Phosphatierung sowie einer kathodischen Tauchlackierung ohne zusätzliche Arbeiten gut möglich ist. Dabei wird durch die erfindungsgemäß abschnittsweise erfolgende Durchhärtung in dem betreffenden Abschnitt eine besonders hohe Festigkeit erzeugt. Diese reicht aus, um auch bei sicherheitsrelevanten Bauteilen ein stets ausreichendes Energieaufnahmevermögen sicherzustellen.

Gleichzeitig steht an dem erfindungsgemäß erzeugten Bauteil mindestens ein weiterer Abschnitt zur Verfügung, der die ursprünglichen Eigenschaften des Bauteils besitzt. Dieser nicht gehärtete Abschnitt kann mit seiner höheren Zähigkeit im Fall eines Crashs die kinetische Energie des Aufpralls als Verformungsenergie aufnehmen. Ebenso kann er dazu genutzt werden, um das jeweilige Bauteil an die übrigen Karosserieteile anzuschließen. Im Ergebnis erlaubt es die Erfindung so, Bauteile aus dünneren, beispielsweise 1,0 mm bis 2,0 mm, insbesondere bis 1,4 mm dicken Blechen und damit einhergehend geringem Gewicht einzusetzen, die eine hinsichtlich ihres Einsatzzwecks optimale Eigenschaftskombination besitzen.

Die Relativbewegung zwischen dem Induktor und dem jeweils durchzuhärtenden Abschnitt des Bauteils kann grundsätzlich dadurch erfolgen, dass sowohl Induktor als auch Bauteil durch eine geeignete Fördereinrichtung in entgegengesetzte Richtungen gefördert werden. Eine praxisgerechte, die bewegten Massen reduzierende Ausgestaltung der Erfindung sieht jedoch vor, dass das Bauteil ortsfest eingespannt ist und der Induktor entlang des durchzuhärtenden Abschnitts des Bauteils bewegt wird. Zu diesem Zweck kann eine erfindungsgemäße Vorrichtung eine ortsfeste Spanneinrichtung zum Einspannen des Bauteils aufweisen und die Fördereinrichtung den Induktor entlang des durchzuhärtenden Abschnitts bewegen. Abhängig von der Größe des Induktors und des Bauteils kann es jedoch auch zweckmäßig sein, den Induktor ortsfest anzuordnen und das Bauteil mit seinem durchzuhärtenden Abschnitt entlang des Induktors zu führen. Dies kann in der Praxis dadurch bewerkstelligt werden, dass der Induktor ortsfest angeordnet ist und die Fördereinrichtung das Bauteil mit seinem durchzuhärtenden Abschnitt längs des Induktors bewegt.

Eine besonders gleichmäßige und intensive Wirkung des vom Induktor erzeugten Feldes auf den durchzuhärtenden Abschnitt des Bauteils kann dadurch erreicht werden, dass der Induktor ein Ringinduktor ist, durch dessen Öffnung das Bauteil geführt wird. Die Form des Ringinduktors und seiner

Öffnung kann dabei an die Form des Bauteils angepasst werden, um eine gleichmäßige Einwirkung des vom Induktor erzeugten Feldes auf das Bauteil zu gewährleisten.

Um eine möglichst gleichmäßige, homogene Erwärmung über den Bauteilquerschnitt zu erreichen, kann es zweckmäßig sein, das Bauteil während der Erwärmung um eine Längsachse zu drehen.

Praktische Versuche haben zeigt, dass ausreichende Erwärmungsleistungen gewährleistet sind, wenn der Induktor mit einer Leistung von 10 - 300 KW bei einer 50 - 200 KHz betragenden Frequenz betrieben wird.

Zum Abschrecken des erwärmten Teilbereichs kann eine an sich bekannte Brause verwendet werden, deren Düsen bevorzugt ebenfalls so angeordnet sind, dass die Kühlmittelstrahlen die Ober- und Unterseite des Bauteils gleichmäßig gut erreichen. Die Abschreckwirkung kann dabei durch in Abhängigkeit vom ausgebrachten Volumenstrom des Kühlmittels und/oder seiner Zusammensetzung geregelt werden. So hat sich gezeigt, dass abhängig von der Dicke des Bauteils Ausbringraten von 10 bis 100 Liter/Minute vorgesehen werden sollten, um die rasche Abkühlung in der erforderlichen kurzen Zeit zu bewerkstelligen. Die im Zuge dieser Abkühlung erzielte Abkühlrate sollte mindestens 27 K/s betragen. Die Zusammensetzung der Abkühlflüssigkeit kann zu 100 % aus Wasser oder zu 100 % aus einer Polymerkonzentration bzw. zu 100 % aus einer Abschreckölkonzentration bestehen. Bei praktischen Versuchen haben sich Wasser-Polymerlösungen mit einer Polymerkonzentration zwischen 1 - 15 % bewährt.

Das Schutzgas wird zum Schutz des erwärmten Bereichs vor Verzunderung bevorzugt so auf den jeweils erwärmten Teilbereich des Bauteils geleitet, dass das Schutzgas den erwärmten Querschnitt jeweils komplett umströmt. Bei dem Schutzgas kann es sich beispielsweise um ein inertes Edelgas, wie Argon etc., oder um Stickstoffgas handeln. Die Verwendung von Stickstoff als Schutzgas kann sich günstig auf das Durchhärtungsergebnis auswirken, indem eine Nitrierung der Oberfläche durch die Stickstoffeinwirkung erzielt wird. Praktische Versuche haben ergeben, dass eine ausreichende Schutzwirkung erzielt wird, wenn 20 - 60 Liter Schutzgas / Minute ausgebracht werden. Die zum Ausbringen des Schutzgases vorgesehene mindestens eine Düse kann dabei so ausgerichtet sein, dass der Schutzgasstrom direkt in den vom des Induktor jeweils erfassten Teilbereich des Bauteils geleitet wird. Dazu kann die Düse bezogen auf die Richtung der Relativbewegung von Induktor und Bauteil vor dem Induktor angeordnet sein.

Die Effektivität der Abschirmung der erwärmten Zone des Bauteils durch das Schutzgas kann dabei dadurch noch gesteigert werden, dass bei einer erfindungsgemäßen Vorrichtung die Schutzgaseinrichtung ein die zum Ausbringen des Gases vorgesehene Düse aufnehmendes Gehäuse umfasst, das bezogen auf die Richtung der Relativbewegung zwischen dem Induktor und dem Bauteil vor dem Induktor angeordnet ist und den durchzuhärtenden Abschnitt mindestens über eine Teillänge umschließt.

Ein besonders einfacher und gleichzeitig robuster Aufbau einer erfindungsgemäßen Vorrichtung ergibt sich dann, wenn der Induktor, die Brause und die zum Ausbringen des Schutzgases benötigte Düse sowie das ggf. vorhandene Gehäuse der Schutzgaseinrichtung hinsichtlich der von ihnen ausgeführten Bewegungen miteinander verkoppelt sind.

Der Abstand der Abschreckeinrichtung zum Induktor ist bevorzugt so klein wie möglich, um unkontrollierte Abkühlvorgänge zu vermeiden. Daher sieht eine bevorzugte Ausgestaltung der Erfindung vor, die Abschreckeinrichtung im unmittelbaren Anschluss an den Induktor zu positionieren.

Eine weitere vorteilhafte Ausgestaltung der Erfindung sieht vor, dass das Bauteil unmittelbar nach dem Abschrecken in eine Korrosionsschutzlösung eingetaucht wird. Die Wirkung der Korrosionsschutzlösung kann erforderlichenfalls durch einen unmittelbar nachgeschalteten Trocknungsprozess erhöht werden. Bei besonderen Korrosionsschutzvorschriften kann ein weiterer Tauchgang in einem speziellen Korrosionsschutzöl erfolgen.

Des Weiteren kann eine erfindungsgemäße Vorrichtung mit einer Einrichtung zur Qualitätssicherung ausgestattet sein, die es erlaubt, die einzelnen Prozessschritte online zu überwachen. Dazu gehören eine Frequenzregelanlage für die Induktionsfrequenz, eine Temperaturüberwachung der Erwärmungsstelle beispielsweise über entsprechende Pyrometertechnik und Überwachung der Relativbewegungen der Teile. Ebenso werden die Volumenströme von Gas und Kühlmittel gemessen und aufgezeichnet. Alle Daten können über eine speicherprogrammierbare Steuerung miteinander verknüpft werden und dienen somit der aktiven Qualitätsüberwachung.

Nachfolgend wird die Erfindung anhand einer ein Ausführungsbeispiel darstellenden Zeichnung näher erläutert. Es zeigen jeweils schematisch:

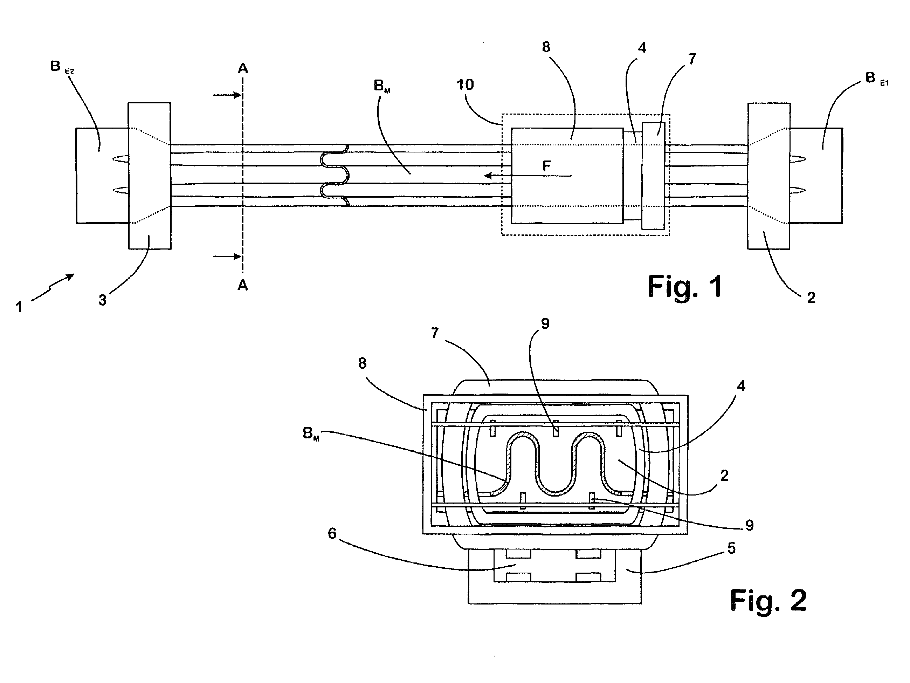

- Fig. 1: eine Vorrichtung zum Durchhärten eines Abschnitts eines Bauteils für eine PKW-Karosserie in Draufsicht;
- Fig. 2: die in Fig. 1 dargestellte Vorrichtung in einem Schnitt entlang der in Fig. 1 eingetragenen Schnittlinie A-A;

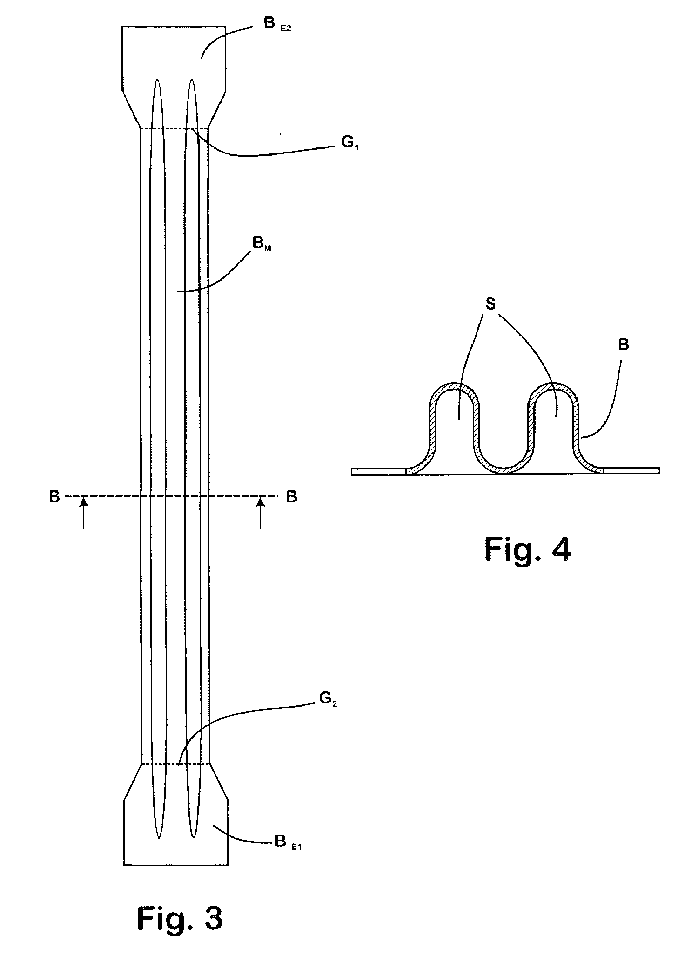

- Fig. 3: das fertig bearbeitete Bauteil in Draufsicht;
- Fig. 4: das Bauteil in einem Schnitt entlang der in Fig. 3 eingetragenen Schnittlinie B-B.

Die Vorrichtung 1 dient zum Durchhärten eines mittleren Abschnitts B_{M} eines aus einem 1,2 mm dicken Stahlblech fertig kaltgeformten Bauteils B, der ein Seitenaufprallträger für eine hier nicht gezeigte Tür einer ebenfalls nicht dargestellten PKW-Karosserie ist. In das Bauteil B sind parallel verlaufende sich über die Länge des Abschnitts B_{M} erstreckende Sicken S eingeformt. An die Enden des mittleren, durchzuhärtenden Abschnitts B_{M} schließt sich jeweils ein Endabschnitt B_{E1}, B_{E2} an, der eine gegenüber dem mittleren Abschnitt B_{M} vergrößerte Breite aufweist und an dem Versteifungselemente oder andere hier nicht dargestellte Formelemente ausgebildet sein können. Die Endabschnitte B_{E1} und B_{E2} dienen zum Anbinden des Bauteils B an Anschlussstücke, die an den im Einbauzustand an das Bauteil B angrenzenden Bauelementen der Tür ausgebildet sind.

Die Vorrichtung 1 weist zwei ortsfest montierte Spanneinrichtungen 2,3 auf, in denen das Bauteil B mit seinen nicht zu härtenden Endabschnitten B_{E1},B_{E2} derart eingespannt ist, dass die einander zugeordneten Stirnseiten der Spanneinrichtungen 2,3 jeweils auf Höhe der Grenzen G₁,G₂ zwischen dem mittleren Abschnitt B_{M} und dem jeweils angrenzenden Endabschnitt B_{E1} bzw. B_{E2} des Bauteils B angeordnet sind. Das Ober- und Unterteil der Spanneinrichtungen 2,3 ist dabei jeweils so geformt, dass das Bauteil formschlüssig zwischen den entsprechenden Ausnehmungen und Vorsprüngen der Spanneinrichtung 2,3 gehalten und großflächig in direktem wärmeleitenden Kontakt mit den Spanneinrichtungen 2,3 steht.

Die Spanneinrichtungen 2,3 werden von einer nicht dargestellten Wasserkühlung aktiv gekühlt, die kontinuierlich einen Wasserstrom durch sie fördert. Auf diese Weise wirken die Spanneinrichtungen 2,3 als Wärmesenken, von denen durch Wärmeableitung ein Wärmefluss vom mittleren Abschnitt B_{M} zu den angrenzenden Endabschnitten B_{E1}, B_{E2} des Bauteils B so stark erschwert wird, dass die Endabschnitte B_{E1}, B_{E2} auch im grenznahen Bereich nicht auf eine die Eigenschaften der Endabschnitte B_{E1}, B_{E2} nachhaltig verändernde Temperatur erwärmt werden.

Die Vorrichtung 1 weist des Weiteren einen ringförmig ausgebildeten Induktor 4 auf, der mit seinen Heizleiterästen die vom Induktor 4 umgebende Öffnung umgreift. Der Induktor 4 wird von einer Fördereinrichtung 5 getragen, die den Induktor 4 auf einer sich zwischen den Spanneinrichtungen 2,3 erstreckenden Führungsbahn 6 von einer Startposition an der ersten Spanneinrichtung 2 in Förderrichtung F zu einer Endposition an der zweiten Spanneinrichtung 3 bewegt. Der Induktor 4 wird auf diese Weise über den durchzuhärtenden mittleren Abschnitt B_{M} des Bauteils B geführt, welches dabei durch die Öffnung des Induktors 4 greift.

Zusätzlich trägt die Fördereinrichtung 5 eine in Förderrichtung F gesehen hinter dem Induktor 4 angeordnete Brause 7 einer weiter nicht dargestellten Abschreckeinrichtung. Die Brause 7 umgreift wie der Induktor 4 den durchzuhärtenden Abschnitt B_{M} des Bauteils B nach Art eines Rings. Auf ihrer dem Bauteil B zugeordneten Innenfläche weist sie in regelmäßigen Abständen angeordnete, hier nicht sichtbare Düsen zum Ausbringen von Abschreckflüssigkeit auf. Die Brause 7 grenzt dabei unmittelbar an die Rückseite des Induktors 4 an, so dass die von der Brause 7 ausgebrachte Abschreckflüssigkeit den vom Induktor 4 jeweils erwärmten Teilbereich des Abschnitts B_{M} unmittelbar erreicht, nachdem dieser Teilbereich auf Härtetemperatur erhitzt ist.

In Förderrichtung F vor dem Induktor 4 und unmittelbar angrenzend an seine Vorderseite ist ein ebenfalls von der Fördereinrichtung 5 getragenes Gehäuse 8 angeordnet, das das Bauteil B nach Art einer Hülle ebenfalls umgibt. In dem Gehäuse 8 ist eine Vielzahl von Düsen 9 zum Ausbringen eines Schutzgases angeordnet. Die Düsen 9 sind dabei so ausgerichtet, dass das von ihnen ausgebrachte Gas in einer oberflächennahen laminaren Strömung über die Ober- und die Unterseite des Abschnitts B_{M} in Richtung des Teilbereichs strömen, der vom Induktor 4 jeweils auf Härtetemperatur erwärmt wird. Auf diese Weise ist eine Abschottung gebildet, durch die der Zutritt von Umgebungssauerstoff zu dem erhitzten Teilbereich weitestgehend verhindert wird.

Zur Vorbereitung des Durchhärtens des mittleren Abschnitts B_{M} des aus einem Stahlblech mit folgender handelsüblicher Zusammensetzung (in Gew.-%) C: 0,25 %, Si: 0,40 %, Mn: 1,40 %, P: 0,025 %, Cr + Mo: 0,50 %, Ti: 0,05 % B: 0,0050 %, Rest Eisen und unvermeidbare Verunreinigungen fertig kaltgeformten Bauteils B wird das Bauteil B bei geöffneten Spanneinrichtungen 2,3 durch die Öffnungen des Induktors 4, der Brause 7 und des Gehäuses 8 geschoben, bis die Endabschnitte B_{E1},B_{E2} in den Spanneinrichtungen 2,3 liegen. Anschließend werden die Spanneinrichtungen 2,3 geschlossen, so dass das Bauteil B ortsfest gehalten ist. Die durch den Induktor 4, die Brause 7 und das Gehäuse 8 gebildete und hinsichtlich ihrer Bewegungen miteinander verkoppelte Baugruppe 10 wird dann von der Fördereinrichtung 5 in die Startposition gefahren. Ausgehend von der Startposition an der Spanneinrichtung 2 wird die Baugruppe dann von der Fördereinrichtung 5 in Richtung ihrer Endposition an der zweiten Spanneinrichtung 3 bewegt. Um eine wirtschaftliche Arbeitsweise zu gewährleisten, lag der durch die Fördereinrichtung 5 bewirkte Vorschub der Baugruppe 10 oberhalb von 10 mm/s, konkret beispielsweise bei 13 mm/s.

Unter Berücksichtigung der Dicke und Geometrie des Abschnitts B_{M} wird der Induktor 4 dabei mit einer Leistung im Bereich zwischen 20 und 30 kW bei einer 80 - 100 kHz betragenden Frequenz betrieben, um den im Wirkbereich des von ihm induzierten elektromagnetischen Feldes jeweils befindlichen Teilbereich über die gesamte Dicke des Abschnitts B_{M} auf eine gleichmäßig verteilte Härtetemperatur zu bringen. Diese liegt über der A_{C3}-Temperatur des Stahls, aus dem das Bauteil B hergestellt ist.

Während der Erwärmung wird der vom Induktor 4 jeweils erfasste Teilbereich des Abschnitts B_{M} laufend in der beschriebenen Weise mit als Schutzgas eingesetztem Stickstoffgas gespült, um einen Zutritt von Sauerstoff zu der erhitzten Stelle zu unterdrücken.

Gleichzeit wird über die Brause 7 laufend Abschreckflüssigkeit auf den unter die Brause 7 geratenden, zuvor auf Härtetemperatur erhitzten Teilbereich ausgebracht. Auf diese Weise wird der zuvor erhitzte Teilbereich massiv abgeschreckt, so dass dort ein eine hohe Härte von mindestens 400 HV1 gewährleistendes Härtegefüge entsteht. Unter Berücksichtigung der Geometrie, Wandstärke und Größe des Bauteils B beträgt dabei die Ausbringrate der Brause 10 - 50 1/min.

### BEZUGSZEICHEN

- 1: Vorrichtung zum Durchhärten des mittleren Abschnitts B_{M} des Bauteils B
- 2,3: Spanneinrichtungen
- 4: Induktor
- 5: Fördereinrichtung
- 6: Führungsbahn
- F: Förderrichtung
- 7: Brause
- 8: Gehäuse
- 9: Düsen
- 10: Baugruppe

- B: Bauteil
- B_{M}: durchzuhärtender Abschnitt des Bauteils B
- B_{E1}, B_{E2}: Endabschnitte des Bauteils B
- G₁, G₂: Grenzen zwischen dem durchzuhärtenden Abschnitt B_{M} und dem jeweils angrenzenden Endabschnitt B_{E1} bzw. B_{E2}
- S: Sicken

## Patentansprüche

1. Verfahren zum abschnittsweisen Durchhärten von aus 0,5 - 3,0 mm dickem Stahlblech fertig geformten Bauteilen,
- bei dem der jeweils durchzuhärtende Abschnitt (B_{M}) und ein ein elektromagnetisches Feld induzierender Induktor (4) relativ zueinander bewegt werden,
- bei dem der durchzuhärtende Abschnitt (B_{M}) in dem vom Induktor (4) jeweils erfassten Teilbereich induktiv auf Härtetemperatur erwärmt wird und
- bei dem der auf Härtetemperatur erwärmte Teilbereich unmittelbar nach dieser Erwärmung so abgeschreckt wird, dass in dem jeweils fertig gehärteten Teilbereich über die Dicke des Bauteils (B) Härtegefüge erhalten wird,
**dadurch gekennzeichnet, dass**
- der vom Induktor (4) jeweils induktiv auf Härtetemperatur gebrachte Teilbereich unter Schutzgas gehalten wird und
- bei dem das Bauteil an der Grenze zwischen dem durchzuhärtenden Abschnitt und dem nicht gehärteten Abschnitt des Bauteils durch eine dort positionierbare, aktiv gekühlte Spanneinrichtung gekühlt wird, welche während des Durchhärtens in wärmeleitendem Kontakt mit dem Bauteil steht und in den Grenzbereich gelangende Wärme abführt.

2. Verfahren nach Anspruch 1, **dadurch gekennzeichnet, dass** das erhaltene Bauteil (B) eine so zunderfreie Oberfläche aufweist, dass es ohne weitere Oberflächenbearbeitung einer Phosphatierung und / oder kathodischen Tauchlackierung unterzogen werden kann.

3. Verfahren nach einem der voranstehenden Ansprüche, **dadurch gekennzeichnet, dass** es aus einem borlegierten Stahl hergestellt ist.

4. Verfahren nach Anspruch 3, **dadurch gekennzeichnet, dass** das Bauteil (B) nach Abschluss des Härtevorgangs über seinem durchgehärteten Abschnitt (B_{M}) eine Härte von 400 - 550 HV1 aufweist.

5. Verfahren nach einem der voranstehenden Ansprüche, **dadurch gekennzeichnet, dass** die Dicke der Bleche, aus denen das Bauteil gefertigt ist, 1,0 - 2,0 mm, insbesondere bis 1,4 mm, beträgt.

6. Verfahren nach einem der voranstehenden Ansprüche, **dadurch gekennzeichnet, dass** das Bauteil (B) ortsfest eingespannt ist und der Induktor (4) entlang des durchzuhärtenden Abschnitts (B_{M}) des Bauteils (B) bewegt wird.

7. Verfahren nach einem der Ansprüche 1 bis 5,
**dadurch gekennzeichnet, dass** der Induktor (4) ortsfest angeordnet ist und das Bauteil (B) mit seinem durchzuhärtenden Abschnitt (B_{M}) entlang des Induktors (4) geführt wird.

8. Verfahren nach einem der voranstehenden Ansprüche,
**dadurch gekennzeichnet, dass** der Induktor (4) ein Ringinduktor ist, durch dessen Öffnung das Bauteil (B) geführt wird.

9. Verfahren nach einem der voranstehenden Ansprüche,
**dadurch gekennzeichnet, dass** als Schutzgas ein Edelgas verwendet wird.

10. Verfahren nach einem der Ansprüche 1 bis 8,
**dadurch gekennzeichnet, dass** als Schutzgas Stickstoff verwendet wird.

11. Vorrichtung zum abschnittsweisen Durchhärten von aus einem 0,5 - 3,0 mm dicken Stahlblech fertig geformten Bauteilen (B),
- mit einem Induktor (4) zum Erwärmen jeweils eines Teilbereichs des durchzuhärtenden Abschnitts (B_{M}) des Bauteils (B) auf Härtetemperatur,
- mit einer Abschreckeinrichtung (7) zum Abschrecken des auf Härtetemperatur erwärmten Teilbereichs,
- mit einer Fördereinrichtung (5), die das Bauteil (B) und den Induktor relativ zueinander bewegt,
**dadurch gekennzeichnet, dass**
- eine Schutzgaseinrichtung (9) zum Ausbringen eines mindestens den vom Induktor (4) jeweils erfassten Teilbereich umhüllenden Schutzgasstroms und
- mindestens eine an der Grenze (G₁, G₂) zwischen dem durchzuhärtenden Abschnitt (B_{M}) und dem nicht gehärteten Abschnitt (B_{E1}, B_{E2}) des Bauteils (B) positionierbare und aktiv gekühlte Spanneinrichtung (2,3) vorgesehen ist, die in wärmeleitendem Kontakt mit dem Bauteil (B) steht und in den Grenzbereich (G₁, G₂) gelangende Wärme abführt.

12. Vorrichtung nach Anspruch 11, **dadurch gekennzeichnet, dass** eine ortsfeste Spanneinrichtung (2,3) zum Einspannen des Bauteils (B) vorgesehen ist und **dass** die Fördereinrichtung (5) den Induktor (4) entlang des durchzuhärtenden Abschnitts (B_{M}) bewegt.

13. Vorrichtung nach Anspruch 11, **dadurch gekennzeichnet, dass** der Induktor (4) ortsfest angeordnet ist und die Fördereinrichtung das Bauteil (B) mit seinem durchzuhärtenden Abschnitt (B_{M}) längs des Induktors (4) bewegt.

14. Vorrichtung nach einem der Ansprüche 12 oder 13,
**dadurch gekennzeichnet, dass** die Schutzgaseinrichtung mindestens eine Düse (9) zum Ausbringen des Schutzgases umfasst.

15. Vorrichtung nach Anspruch 14, **dadurch gekennzeichnet, dass** die Schutzgaseinrichtung ein die Düse (9) aufnehmendes Gehäuse umfasst, das bezogen auf die Richtung der Relativbewegung zwischen dem Induktor (4) und dem Bauteil (B) vor dem Induktor (4) angeordnet ist und den durchzuhärtenden Abschnitt (B_{M}) über eine Teillänge umschließt.

16. Vorrichtung nach einem der Ansprüche 11 bis 15,
**dadurch gekennzeichnet, dass** der Induktor (4) und die Brause (7) hinsichtlich der von ihnen ausgeführten Bewegungen miteinander verkoppelt sind.

17. Vorrichtung nach einem der Ansprüche 14 bis 16
**dadurch gekennzeichnet, dass** der Induktor (4) und die Düse (9) der Schutzgaseinrichtung hinsichtlich der von ihnen ausgeführten Bewegungen miteinander verkoppelt sind.

18. Vorrichtung nach einem der Ansprüche 14 bis 17,
**dadurch gekennzeichnet, dass** der Induktor (4), die Brause (7) und die Düse (9) eine Baugruppe bilden.

## Claims

1. Method for the through-hardening in sections of components finish-formed from 0.5 - 3.0 mm thick sheet steel,
- in which the section (B_{M}) to be through-hardened at the time and an inductor (4) which induces an electromagnetic field are moved relative to one another,
- in which the section (B_{M}) to be through-hardened is inductively heated to a hardening temperature in the sub-region enclosed at the time by the inductor (4), and
- in which the sub-region which has been heated to the hardening temperature is quenched, immediately after this heating, in such a way that a hardened microstructure is obtained throughout the thickness of the component (B) in the sub-region which is fully hardened at the time,
**characterised in that**
- the sub-region which is inductively heated to the hardening temperature by the inductor (4) at the time is kept under inert gas and
- in which, at the boundary between the section to be through-hardened of the component and the non-hardened section thereof, the component is cooled by an actively cooled clamping arrangement which can be positioned at the boundary and which, during the through-hardening, is in thermally conductive contact with the component and takes away heat which makes its way into the region of the boundary.

2. Method according to claim 1, **characterised in that** the component (B) obtained has a surface which is so free of scaling that it can be subjected to phosphating and/or cathodic dip painting without any further treatment of the surface.

3. Method according to either of the preceding claims, **characterised in that** it is made from a boron-alloyed steel.

4. Method according to claim 3, **characterised in that** the component (B) has a hardness of 400 - 550 HV1 throughout its through-hardened section (B_{M}) on completion of the hardening process.

5. Method according to one of the preceding claims, **characterised in that** the thickness of the sheet metal from which the component is produced is 1.0 - 2.0 mm, in particular is up to 1.4 mm.

6. Method according to one of the preceding claims, **characterised in that** the component (B) is clamped in place in a fixed position and the inductor (4) is moved along the section (B_{M}) to be through-hardened of the component (B).

7. Method according to one of claims 1 to 5, **characterised in that** the inductor (4) is arranged in a fixed position and the section (B_{M}) to be through-hardened of the component (B) is moved along the inductor (4).

8. Method according to one of the preceding claims, **characterised in that** the inductor (4) is an annular inductor through whose opening the component (B) is guided.

9. Method according to one of the preceding claims, **characterised in that** a noble gas is used as the inert gas.

10. Method according to one of claims 1 to 8, **characterised in that** nitrogen is used as the inert gas.

11. Apparatus for the through-hardening in sections of components (B) finish-formed from 0.5 - 3.0 mm thick sheet steel,
- having an inductor (4) for heating one sub-region at a time of the section (B_{M}) to be through-hardened of the component (B) to a hardening temperature,
- having a quenching arrangement (7) for quenching the sub-region which has been heated to the hardening temperature,
- having a feeding arrangement (5) which moves the component (B) and the inductor relative to one another,
**characterised in that**
- there are provided a inert gas arrangement (9) for discharging a flow of inert gas which envelops at least the sub-region which is enclosed by the inductor (4) at the time and
- at least one actively cooled clamping arrangement (2, 3) which can be positioned at the boundary (G₁, G₂) between the section (B_{M}) to be through-hardened of the component (B) and the non-hardened section (B_{E1}, B_{E2}) thereof and which is in thermally conductive contact with the component (B) and takes away heat which makes its way into the region of the boundary (G₁, G₂).

12. Apparatus according to claim 11, **characterised in that** a clamping arrangement (2, 3) in a fixed position is provided for clamping the component (B) in place, and **in that** the feeding arrangement (5) moves the inductor (4) along the section (B_{M}) to be through-hardened.

13. Apparatus according to claim 11, **characterised in that** the inductor (4) is arranged in a fixed position and the feeding arrangement moves the section (B_{M}) to be through-hardened of the component (B) along the inductor (4).

14. Apparatus according to either of claims 12 and 13, **characterised in that** the arrangement for inert gas comprises at least one nozzle (9) for discharging the inert gas.

15. Apparatus according to claim 14, **characterised in that** the arrangement for inert gas comprises a housing which holds the nozzle (9), which is arranged upstream of the inductor (4) in relation to the direction of relative movement between the inductor (4) and the component (B), and which surrounds the section (B_{M}) to be through-hardened for part of its length.

16. Apparatus according to one of claims 11 to 15, **characterised in that** the inductor (4) and the spray system (7) are coupled together for the movements performed by them.

17. Apparatus according to one of claims 14 to 16, **characterised in that** the inductor (4) and the nozzle (9) of the arrangement for inert gas are coupled together for the movements performed by them.

18. Apparatus according to one of claims 14 to 17, **characterised in that** the inductor (4), spray system (7) and nozzle (9) form a sub-assembly.

## Revendications

1. Procédé pour le durcissement à coeur, par sections, de pièces finies, en tôle d'acier de 0,5 à 3,0 mm d'épaisseur, obtenues par formage,
- dans lequel chaque section à durcir à coeur (B_{M}) et un inducteur (4), qui induit un champ électromagnétique, sont déplacés l'un par rapport à l'autre,
- dans lequel la section à durcir à coeur (B_{M}) est chauffée par induction à la température de durcissement, dans la zone partielle, chaque fois saisie par l'inducteur (4), et
- dans lequel la zone partielle, chauffée à la température de durcissement, est trempée après ce chauffage, de sorte qu'une structure durcie soit obtenue sur toute l'épaisseur de la pièce (B), dans la zone partielle durcie, finie,
**caractérisé en ce que**
- chaque zone partielle, chauffée par induction à la température de durcissement, par l'inducteur (4), est tenue sous un gaz protecteur, et
- dans lequel la pièce est refroidie à la limite entre la section à durcir à coeur et la section non durcie de ladite pièce, par un dispositif de serrage refroidi de manière active, qui, pouvant être positionné à cet endroit, est, pendant le durcissement à coeur, en contact de conduction thermique avec la pièce et évacue la chaleur, qui parvient dans cette zone limite.

2. Procédé selon la revendication 1, **caractérisé en ce que** la pièce (B) obtenue est dotée d'une surface exempte de calamine telle que, sans autre traitement de sa surface, elle peut être soumise à une phosphatation et / ou à un laquage par immersion cathodique.

3. Procédé selon l'une des revendications précédentes, **caractérisé en ce que** la pièce est fabriquée avec un acier allié au bore.

4. Procédé selon la revendication 3, **caractérisé en ce que** la pièce (B) présente, après le processus de durcissement, une dureté de 400 à 550 HV1 sur sa section à durcir à coeur (B_{M}).

5. Procédé selon l'une des revendications précédentes, **caractérisé en ce que** l'épaisseur de la tôle, à partir de laquelle la pièce est réalisée, est de 1,0 jusqu'à 2,0 mm, en particulier jusqu'à 1,4 mm.

6. Procédé selon l'une des revendications précédentes, **caractérisé en ce que** la pièce (B) est serrée à un endroit fixe et que l'inducteur (4) est déplacé le long de la section à durcir à coeur (B_{M}).

7. Procédé selon l'une des revendications 1 à 5, **caractérisé en ce que** l'inducteur (4) est installé fixement et que la pièce (B) est conduite le long de l'inducteur (4) avec sa section à durcir à coeur (B_{M}).

8. Procédé selon l'une des revendications précédentes, **caractérisé en ce que** l'inducteur (4) est un inducteur annulaire, à travers l'ouverture duquel la pièce (B) est conduite.

9. Procédé selon l'une des revendications précédentes, **caractérisé en ce qu'**un gaz rare est utilisé en tant que gaz protecteur.

10. Procédé selon l'une des revendications 1 à 8, **caractérisé en ce que** de l'azote est utilisé en tant que gaz protecteur.

11. Dispositif pour le durcissement à coeur, par sections, de pièces finies (B), en tôle d'acier de 0,5 à 3,0 mm d'épaisseur, obtenues par formage,
- avec un inducteur (4) pour chauffer, chaque fois, à la température de durcissement, une zone partielle de la section à durcir à coeur (B_{M}) de la pièce (B),
- avec un dispositif de abschreckung (7) pour le abschrecken de la zone partielle chauffée à la température de durcissement,
- avec un dispositif de transport (5), qui déplace la pièce (B) et l'inducteur l'une par rapport à l'autre, **caractérisé en ce que** sont prévus
- une installation de gaz protecteur (9) pour l'application d'un flux de gaz protecteur, qui enveloppe au moins la zone partielle, saisie chaque fois par l'inducteur (4), et
- au moins un dispositif de serrage (2, 3), qui, pouvant être positionné dans la régione limite (G₁, G₂) entre la section à durcir à coeur (B_{M}) et la section non durcie B_{E1}, B_{E2}) de la pièce (B) et étant activement refroidi, est en contact thermoconducteur avec la pièce (B) et évacue la chaleur parvenue dans la région limite (G₁, G₂).

12. Dispositif selon la revendication 11, **caractérisé en ce qu'**un dispositif de serrage (2, 3) fixe est prévu pour le serrage de la pièce (B) et que le dispositif de transport (5) déplace l'inducteur (4) le long de la section à durcir à coeur (B_{M}).

13. Dispositif selon la revendication 11, **caractérisé en ce que** l'inducteur (4) est installé fixement et que le dispositif de transport déplace la pièce (B), avec sa section à durcir à coeur (B_{M}), le long de l'inducteur (4).

14. Dispositif selon revendication 12 ou 13, **caractérisé en ce que** l'installation de gaz protecteur est dotée d'au moins une buse (9) pour l'application du gaz protecteur.

15. Dispositif selon la revendication 14, **caractérisé en ce que** l'installation de gaz protecteur est dotée d'un boîtier, qui, accueillant la buse (9), est disposé en amont de l'inducteur (4), dans la direction du mouvement relatif entre l'inducteur (4) et la pièce (B), et qui entoure la section à durcir à coeur (B_{M}), sur une partie de la longueur.

16. Dispositif selon l'une des revendications 11 à 15, **caractérisé en ce que** l'inducteur (4) et le dispositif d'aspersion (7) sont couplés ensemble en ce qui concerne l'exécution de leurs mouvements.

17. Dispositif selon l'une des revendications 14 à 16, **caractérisé en ce que** l'inducteur (4) et la buse (9) de installation de gaz protecteur (9) sont couplés ensemble en ce qui concerne l'exécution de leur mouvements.

18. Dispositif selon l'une des revendications 14 à 17, **caractérisé en ce que** l'inducteur (4), le dispositif d'aspersion (7) et la buse (9) forment un groupe.
